# EUROPÄISCHE PATENTANMELDUNG

(11) **EP 2 479 157 A2**
(43) Veröffentlichungstag der Anmeldung: **25.07.2012**
(21) Anmeldenummer: 12151765.0
(22) Anmeldetag: 19.01.2012
(51) Int. Cl.: C04B 26/14, C04B 40/06

(54) **Mehr-Komponenten-Reaktionsharzmörtel auf Epoxidharzbasis**

(30) Priorität: 20.01.2011 DE 102011000232
(71) Anmelder: Saft, Michael, 21775 Ihlienworth (DE)
(72) Erfinder: Saft, Michael, 21775 Ihlienworth (DE)
(74) Vertreter: Kreuzkamp, Markus

(57) **Zusammenfassung**

Die vorliegende Erfindung betrifft einen lösungsmittelfreien Mehr-Komponenten-Reaktionsharzmörtel auf Epoxidharzbasis mit mineralischen Füllstoffen und gegebenenfalls Pigmenten, welcher dadurch gekennzeichnet ist, dass dieser eine hohe Beständigkeit gegenüber wassergefährdenden Flüssigkeiten aufweist, derart, dass ein aus diesem Mörtel hergestellter Prüfkörper nach Aushärtung eine Eindringtiefe für Dieselkraftstoffe von weniger als 40 mm aufweist. Der Reaktionsharzmörtel eignet sich für die Instandsetzung von Betonbauteilen in LAU-Anlagen. Aus diesem Reaktionsharzmörtel wurden zylindrische Prüfkörper hergestellt und in eine Prüfflüssigkeit, beispielsweise Dieselkraftstoff für eine gewisse Zeitdauer eingelagert und danach wurde die Eindringtiefe der Prüfflüssigkeit bestimmt. Ein Längsschnitt durch einen solchen Prüfkörper 24 ist dargestellt, wobei durch Anlegen eines Maßstabs 25 verdeutlicht ist, wie weit die Prüfflüssigkeit in den Prüfkörper 24 eingedrungen ist. Die Linie der eingedrungenen Flüssigkeit ist mit 26 bezeichnet.

## Beschreibung

Die vorliegende Erfindung betrifft einen lösungsmittelfreien Mehr-Komponenten-Reaktionsharzmörtel auf Epoxidharzbasis mit mineralischen Füllstoffen und gegebenenfalls Pigmenten.

So genannte LAU-Anlagen sind Anlagen zum Lagern, Abfüllen und Umschlagen wassergefährdender Stoffe. In Bereichen, in denen Betonbauteile von LAU-Anlagen einer besonders starken Belastung ausgesetzt sind, beispielsweise in überfahrenen Kantenbereichen, kommt es in Verbindung mit Witterungseinflüssen zu Schäden, die einer Reparatur bedürfen. Um einen Mörtel zu erhalten, welcher sich zur Instandsetzung von Betonbauteilen in LAU-Anlagen eignet, muss dieser so beschaffen sein, dass er gegen die mit diesem in Kontakt kommenden Flüssigkeiten, die in den LAU-Anlagen gelagert werden, dauerhaft beständig ist. Dies bedeutet, dass sich die mechanischen Eigenschaften bei in Kontakt bringen bestimmter Prüfflüssigkeiten mit aus diesem Mörtel bestehenden Bauteilen oder Bauteilabschnitten nicht verändern dürfen und es muss sichergestellt sein, dass diese Prüfflüssigkeiten nicht in einen mittels dieses Mörtels instandgesetzten Bereich eines Bauteils eindringen können. Als Prüfflüssigkeiten für Polymerbetonsysteme in LAU-Anlagen werden insbesondere Ottokraftstoffe, Flugkraftstoffe, Heizöl, Dieselkraftstoffe, auch im Gemisch mit Biodiesel, Kohlenwasserstoffe, Benzol, Rohöle und gebauchte Verbrennungsmotorenöle verwendet.

Aus der DE 296 23 574 U1 ist ein Harz/Füllstoffsystem zur Erzeugung von Beschichtungen und zur Herstellung von Kunststoffböden mit Natursteineffekt bekannt, die quasi als preiswerter Ersatz von Fußböden aus teuren Natursteinen wie Granit dienen sollen und somit für den Innenbereich von Gebäuden vorgesehen sind. Aus den genannten Gründen steht bei diesen Kunststoffböden der dekorative Effekt im Vordergrund. Für die Kunstharzmasse wird ein Zweikomponenten-Epoxidharz eingesetzt, welches als Füllstoff u.a. Siliziumdioxid oder Quarzpulver enthalten kann. Als Härterkomponente kann ein cycloaliphatisches Amin verwendet werden. In den Beispielen werden Kunstharzmassen angegeben, die ein Bisphenol-A/F-Epoxidharz und ein cycloaliphatisches Amin in einem Gewichts-Verhältnis von etwa 2 : 1 enthalten, sowie als mineralischen Füllstoff Basalt, Marmor oder Granitbruch in einem Gewichts-Verhältnis von Füllstoff zu Bisphenol-A/F-Epoxidharz von etwa 5,5 : 1. Das Gewichts-verhältnis von Härterkomponente zu Bisphenolharz-Komponente ist also vergleichsweise hoch und der Anteil der beiden Kunstharzkomponenten beträgt im Gemisch mit den Füllstoffen in etwa 15 %.

In der DE 695 06 216 T3 werden Zweikomponenten-Reaktivharze aus einem Bisphenol-A-harz und einem cycloaliphatischen Polyamin als Härter-Komponente beschrieben, welche als Füllstoff u.a. Siliziumdioxidmehl enthalten können. Diese Zweikomponenten-Reaktivharze werden zur Herstellung von Fließenfußböden verwendet und sind somit ebenfalls für den Innen-Fußbodenbereich von Gebäuden vorgesehen. Diese Fließenfußböden sollen gegen die unterschiedlichsten Chemikalien beständig sein, wobei sehr verschiedene Chemikalien wie beispielsweise Säuren und Basen genannt werden, aber auch Alkohole und Kohlenwasserstoffe erwähnt werden. In dieser Druckschrift werden jedoch weder genaue Zusammensetzungen der Zweikomponenten-Reaktivharze angegeben, noch enthält diese spezifische Ausführungen über Untersuchungen zur Beständigkeit der Fliesen gegenüber Kohlenwasserstoffen, so dass die Schrift dem Fachmann keine konkrete Lehre dahingehend gibt, welche Komponenten in welchem Verhältnis zu mischen sind, um zu einem Reaktionsharzmörtel zu gelangen, welcher nach der Aushärtung in besonderem Masse Beständigkeit gegen Kohlenwasserstoffe und verwandte Flüssigkeiten zeigt und welcher sich darüber hinaus für besonders belastete, insbesondere befahrbare Oberflächen eignet, die im Außenbereich den Witterungsverhältnissen ausgesetzt sind.

Die bislang aus dem Stand der Technik bekannten PC - Mörtelsysteme (Polymerbetonsysteme) erfüllen die vorgenannten Anforderungen nicht und erhalten folglich keine bauaufsichtliche Zulassung zur Verwendung für die Instandsetzung von LAU-Anlagen.

Aufgabe der vorliegenden Erfindung ist es, einen lösungsmittelfreien Mehr-Komponenten-Reaktionsharzmörtel auf Epoxidharzbasis mit mineralischen Füllstoffen und gegebenenfalls Pigmenten der eingangs genannten Gattung zur Verfügung zu stellen, der sich aufgrund seiner Eigenschaften zur Instandsetzung von Betonbauteilen in LAU-Anlagen eignet.

Die Lösung dieser Aufgabe liefert ein lösungsmittelfreier Mehr-Komponenten-Reaktionsharzmörtel auf Epoxidharzbasis der eingangs genannten Gattung mit den kennzeichnenden Merkmalen des Hauptanspruchs.

Der erfindungsgemäße Mehr-Komponenten-Reaktionsharzmörtel auf Epoxidharzbasis ist dadurch gekennzeichnet, dass dieser eine hohe Beständigkeit gegenüber wassergefährdenden Flüssigkeiten aufweist, derart, dass ein aus diesem Mörtel hergestellter Prüfkörper nach Aushärtung eine Eindringtiefe für Dieselkraftstoffe von weniger als 40 mm aufweist.

Der erfindungsgemäße Mehr-Komponenten-Reaktionsharzmörtel auf Epoxidkarzbasis eignet sich sehr gut für die Instandsetzung von Verkehrsflächen in Betonbauweise beispielsweise an Tankanlagen und Flugzeugbetankungsflächen, beispielsweise zur Sanierung von Betonkanten im Bereich der überfahrenen Betankungsflächen.

Gemäß einer bevorzugten Weiterbildung der Erfindung weist ein aus dem erfindungsgemäßen Mehr-Komponenten-Reaktionsharzmörtel auf Epoxidharzbasis hergestellter Prüfkörper nach Einlagerung in einen Dieselkraftstoff für eine Zeitdauer von ca. 6 - 7 Tagen eine relative Längenänderung von weniger als 0,20 mm/m auf.

Weiterhin weist gemäß einer Weiterbildung der Erfindung bevorzugt ein aus dem erfindungsgemäßen Mehr-Komponenten-Reaktionsharzmörtel auf Epoxidharzbasis hergestellter Prüfkörper nach Einlagerung in einen Dieselkraftstoff für eine Zeitdauer von ca. 6 - 7 Tagen eine Massenänderung von weniger als 0,40 Massen-% auf.

Weiterhin weist gemäß einer Weiterbildung der Erfindung bevorzugt ein aus dem erfindungsgemäßen Mehr-Komponenten-Reaktionsharzmörtel auf Epoxidharzbasis hergestellter Prüfkörper nach Einlagerung in einen Dieselkraftstoff für eine Zeitdauer von 6 - 7 Tagen eine relative Änderung in der Druckfestigkeit (N/mm²) bezogen auf eine Vergleichsprobe von weniger als 15 % auf.

Weiterhin weist gemäß einer Weiterbildung der Erfindung bevorzugt ein aus dem erfindungsgemäßen Mehr-Komponenten-Reaktionsharzmörtel auf Epoxidharzbasis hergestellter Prüfkörper nach Einlagerung in einen Dieselkraftstoff für eine Zeitdauer von ca. 6 - 7 Tagen eine relative Änderung in der Biegezugfestigkeit (N/mm²) bezogen auf eine Vergleichsprobe von weniger als 15 % auf.

Weiterhin weist gemäß einer Weiterbildung der Erfindung besonders bevorzugt ein aus dem erfindungsgemäßen Mehr-Komponenten-Reaktionsharzmörtel auf Epoxidharzbasis hergestellter Prüfkörper nach Aushärtung eine Eindringtiefe für Dieselkraftstoffe von weniger als 20 mm auf.

Weiterhin weist gemäß einer Weiterbildung der Erfindung besonders bevorzugt ein aus dem erfindungsgemäßen Mehr-Komponenten-Reaktionsharzmörtel auf Epoxidharzbasis hergestellter Prüfkörper nach Aushärtung eine Eindringtiefe für Flugturbinenkraftstoffe von weniger als 40 mm, vorzugsweise weniger als 20 mm auf.

Vorzugsweise wird der erfindungsgemäße lösungsmittelfreie Mehr-Komponenten-Reaktionsharzmörtel hergestellt ausgehend von einer Harz-Komponente A umfassend ein Bisphenol-A-Harz oder Bisphenol A/F - Harz, wenigstens einen Füllstoff und gegebenenfalls wenigstens ein Pigment, sowie einer Härter-Komponente B umfassend ein cycloaliphatisches Polyamin, wobei sich als vorteilhaft erwiesen hat, wenn der Füllstoffanteil im Verhältnis zum Bisphenol-Harz-Anteil in der Harz-Komponente A größer ist als bei bekannten Harz/Füllstoff-Systemen, wobei bevorzugt das Gewicht der Summe der Füllstoffe in der Harz-Komponente A wenigstens das 10-fache des Gewichts des Bisphenol-Harzes in der Harz-Komponente A beträgt. Das Gewicht der Summe der Füllstoffe kann beispielsweise auch etwa das 15-fache des Gewichts des Bisphenol-Harzes enthalten.

Die Verarbeitung erfolgt in der Regel derart, dass die Komponenten A und B zusammengefügt und einige Zeit lang intensiv miteinander vermischt werden. Nach dem Mischen wird in der Regel umgetopft und der Mörtel wird mit einer Kelle verarbeitet. Es empfiehlt sich die Haftflächen beispielsweise mit einem Haftgrund vorzustreichen und den Mörtel dann mit dem Haftgrund "nass in nass" zu verarbeiten. Die anschließende Aushärtungszeit ist abhängig von der Temperatur, in der Regel sind die instandgesetzten Flächen spätestens nach ca. 1 bis 2 Tagen überfahrbar. Es können aber beispielsweise auch schnell härtende Härter-Komponenten eingesetzt werden, um die Abbindung zu beschleunigen, so dass die Überfahrbarkeit in weniger als einem Tag erzielt werden kann.

Bevorzugt ist der Reaktionsharzmörtel hergestellt aus einer Zusammensetzung enthaltend die Harz-Komponente A und die Härter-Komponente B in einem Gewichts-Mischungsverhältnis von wenigstens etwa 25 : 1. Der Anteil der Bisphenol-Harz und Füllstoffe umfassenden Komponente A im Verhältnis zur Härter-Komponente B ist somit größer als bei herkömmlichen Reaktionsharzmörteln.

Bevorzugt liegt das Mischungsverhältnis der Komponenten A und B bezogen auf das Gewicht bei etwa 25 : 1 bis etwa 40 : 1, besonders bevorzugt bei etwa 27 : 1 bis etwa 33 : 1. Die untere Anwendungstemperatur liegt je nachdem, welcher Härter zum Einsatz kommt bei etwa + 5° C bis etwa + 30° C.

Der erfindungsgemäße Mehr-Komponenten-Reaktionsharzmörtel ist bevorzugt ein Zwei-Komponenten-Reaktionsharzmörtel, wobei die Harz-Komponente A als Füllstoff wenigstens eine Substanz ausgewählt aus der Gruppe umfassend Quarzmehl und Siliziumdioxid und/oder als Pigment Titandioxid und/oder Ruß enthält. Die Härter-Komponente B enthält bevorzugt wenigstens einen Alkohol als Beschleuniger, beispielsweise einen aromatischen Alkohol wie Benzylalkohol oder Phenylmethanol.

Bevorzugt ist weiterhin im Rahmen der vorliegenden Erfindung, dass bei dem Mehr-Komponenten-Reaktionsharzmörtel die Harz-Komponente wenigstens einen Feinfüllstoff, vorzugsweise Quarzmehl, und wenigstens einen Füllstoff gröberer Körnung, vorzugsweise Siliziumdioxid, enthält, wobei der Gewichtsanteil des Füllstoffs oder der Füllstoffe gröberer Körnung wenigstens das 4-fache, bevorzugt wenigstens das 5-fache des Gewichtsanteils des Feinfüllstoffs oder der Feinfüllstoffe beträgt. Durch die Art und Menge der Füllstoffe insgesamt und das Verhältnis von gröberen Füllstoffanteilen zu Feinfüllstoffanteilen lassen sich die spezifischen Eigenschaften erzielen, die für einen Reaktionsharzmörtel zur Instandsetzung von unbewehrten und bewehrten Betonbauteilen von Anlagen zum Lagern, Abfüllen und Umschlagen wassergefährdender Stoffe erforderlich sind.

Gegenstand der vorliegenden Erfindung ist weiterhin die Verwendung eines lösungsmittelfreien Mehr-Komponenten-Reaktionsharzmörtels auf Epoxidharzbasis der zuvor beschriebenen Art, insbesondere mit den Merkmalen eines der Ansprüche 1 bis 9 als Instandsetzungsmörtel zur Instandsetzung von unbewehrten und bewehrten Betonbauteilen von Anlagen zum Lagern, Abfüllen und Umschlagen wassergefährdender Stoffe.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen zunächst unter Bezugnahme auf die beiliegenden Zeichnungen näher erläutert. Dabei zeigt:
Figur 1 eine schematisch vereinfachte Ansicht einer überfahrenen Betankungsfläche, bei der Risse mit einem erfindungsgemäßen Zwei-Komponenten-Reaktionsharzmörtel instandgesetzt wurden;
Figur 2 eine perspektivische Ansicht einer Reihe von Prismen, die zu Prüfzwecken aus dem erfindungsgemäßen Zwei-Komponenten-Reaktionsharzmörtel hergestellt und in eine Prüfflüssigkeit eingelagert wurden;
Figur 3 einen Schnitt durch einen zu Prüfzwecken aus dem erfindungsgemäßen Zwei-Komponenten-Reaktionsharzmörtel hergestellten zylindrischen Körper, der in eine Prüfflüssigkeit eingelagert wurde, wobei die Eindringtiefe der Prüfflüssigkeit erkennbar ist;
Figur 4 einen Vertikalschnitt durch einen Ausschnitt einer mit einem erfindungsgemäßen Instandsetzungsmörtel instandgesetzten Betonkonstruktion.

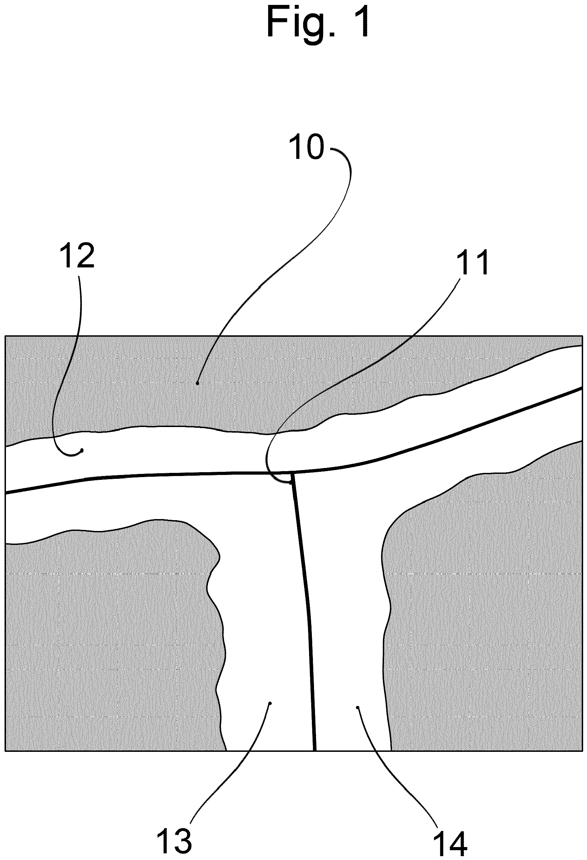

Es wird zunächst auf die Figur 1 Bezug genommen und anhand dieser wird eine mögliche Anwendung des erfindungsgemäßen Zwei-Komponenten-Reaktionsharzmörtels erläutert. Dargestellt ist ein kleiner Ausschnitt aus einer Verkehrsfläche 10, die von zu betankenden Fahrzeugen oder Flugzeugen überfahren wird und bei der im Bereich von Betonkanten Risse entstanden waren, die mit einem erfindungsgemäßen Zwei-Komponenten-Reaktionsharzmörtels instandgesetzt wurden. Man erkennt die jeweils an die Kanten 11 angrenzenden Bereiche 12, 13, 14, die aus dem ausgehärteten erfindungsgemäßen Reparatur-Mörtel bestehen und an die sich die ursprünglichen Betonflächen 10 jeweils mit nahtlosen Übergängen anschließen.

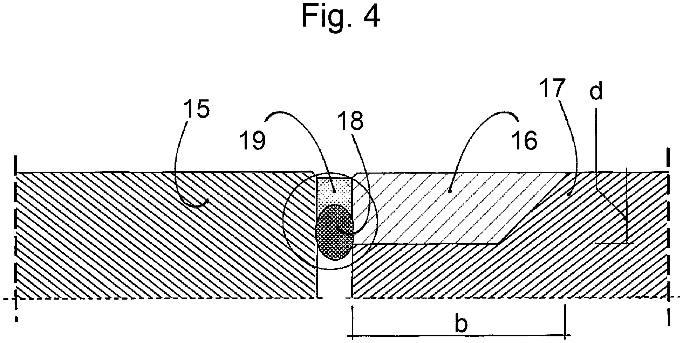

Nachfolgend wird auf Figur 4 Bezug genommen, die einen Vertikalschnitt durch einen Ausschnitt einer mit einem erfindungsgemäßen Instandsetzungsmörtel instandgesetzten Betonkonstruktion zeigt, ähnlich wie sie in Figur 1 in der Ansicht dargestellt ist. Man erkennt in der Darstellung links die bestehende Betonkonstruktion 15 und rechts den instandgesetzten Bereich 16, der dort an die bestehende Betonkonstruktion 17 angrenzt. Zwischen den beiden Bereichen der bestehenden Betonkonstruktion 15, 17 befindet sich eine Fuge, in der ein Kompressionsprofil 18 angeordnet ist, oberhalb dessen ein Fugendichtstoff 19 in die Fuge eingebracht wird, wobei sowohl Kompressionsprofil 18 als auch Fugendichtstoff 19 in der Regel jeweils eine allgemeine bauaufsichtliche Zulassung für die Verwendung in LAU-Anlagen benötigen. Man sieht in Figur 4 weiterhin, dass der instandgesetzte Bereich 16 eine Instandsetzungstiefe "d" aufweist und dass sich an der Oberfläche des instandgesetzten Bereichs 16 eine Instandsetzungsbreite "b" ergibt.

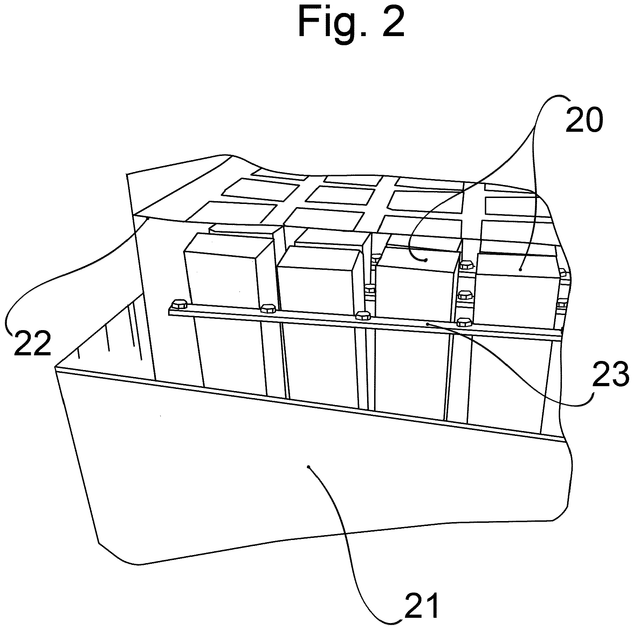

Nachfolgend wird unter Bezugnahme auf die Figur 2 kurz eine beispielhafte Versuchsanordnung erläutert, bei der eine Anzahl aus einem erfindungsgemäßen Zwei-Komponenten-Reaktionsharzmörtel hergestellter etwa quaderförmiger Prüfkörper 20, so genannte Prismen, die in einer Halterung 23 befestigt sind, in ein Becken 21 eingelagert wurden, welches eine Prüfflüssigkeit 22 enthielt. Nach einer Einlagerungszeit in dieser Vorrichtung von beispielsweise 7 Tagen wurden diese Prüfkörper im Hinblick auf die Veränderung diverser mechanischer Eigenschaften untersucht und teilweise wurden diese Veränderungen mit Vergleichsproben verglichen. Die dabei erhaltenen Ergebnisse werden nachfolgend noch in den Beispielen näher erläutert.

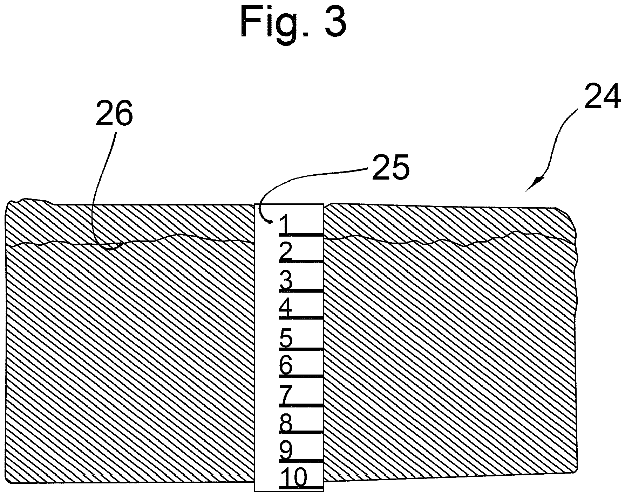

Für die Feststellung der Eindringtiefe der Prüfflüssigkeit wurden zylindrische Prüfkörper aus dem erfindungsgemäßen Zwei-Komponenten-Reaktionsharzmörtel hergestellt, in eine Prüfflüssigkeit für eine vorgegebene Zeitdauer eingelagert und anschließend aufgeschnitten. Figur 3 zeigt einen Längsschnitt durch einen solchen Prüfkörper 24, wobei durch Anlegen eines Maßstabs 25 verdeutlicht ist, wie weit die Prüfflüssigkeit in den Prüfkörper 24 eingedrungen ist. Die Linie der eingedrungenen Flüssigkeit ist mit 26 bezeichnet. Die Eindringtiefe liegt hier bei etwa 10 mm.

Nachfolgend wird die vorliegende Erfindung anhand von Beispielen näher erläutert.

### Beispiel 1

### Verwendetes Zwei-Komponenten-Epoxidharz-Mörtelsystem

Für die Instandsetzung von Kantenbereichen einer von Tankfahrzeugen überfahrenen Verkehrsfläche aus Beton, so wie sie beispielsweise in Figur 1 dargestellt ist, wurde ein pigmentiertes und Füllstoffe enthaltendes erfindungsgemäßes Zwei-Komponenten-Epoxidharz-Mörtelsystem der nachfolgend wiedergegebenen Spezifikation verwendet, welches nach Aushärtung alterungsbeständig, mechanisch hoch belastbar und ab einer Schichtdicke von ca. 5 mm wasserdicht ist.

Dazu wurden die beiden Komponenten A und B mit einer jeweiligen Zusammensetzung gemäß der nachfolgend wiedergegeben Tabelle 1

**Tabelle 1**

| **Komponente A** | | |
|---|---|---|
| | | Gew.-Anteile in % |
| Reaktivverdünntes Bisphenol-A-Harz | Bindemittel | ca. 6 % |
| Quarzmehl | Feinfüllstoff | ca. 13 % |
| Weißes und schwarzes Pigment | Pigmentgemisch | ca. 0,25 % |
| Siliziumdioxid | Füllstoff | ca. 80,75 % |

| **Komponente B** | | |
|---|---|---|
| | | Gew.-Anteile in % |
| Modifiziertes cycloaliphatisches Polyamin | Härterkomponente | ca. 93 % |
| Benzylalcohol, Phenylmethanol | Beschleuniger | ca. 7 % |

in einem Mischungsverhältnis: Komponente A 1,00 kg, Komponente B 33,0 g zusammengegeben und sofort mit einem Zwangsmischer mindestens etwa 3 Minuten lang intensiv vermischt. Nach dem Mischen wurde die Mörtelmischung umgetopft und anschließend mit der Kelle verarbeitet. Die Haftflächen, auf die der Mörtel aufgebrachte wurde, wurden zuvor mit einem Haftgrund vorgestrichen. Danach wurde der Mörtel mit dem Haftgrund "nass in nass" verarbeitet. Der Mörtel hatte nach Aushärtung ein spezifisches Gewicht von 2,14 g/cm³, sein Härtungsschrumpf lag bei weniger als 0,1 %. Nach 7-tägiger Aushärtung ergaben sich eine Druckfestigkeit von ca. 96 N/mm² und eine Biegezugfestigkeit von ca. 32 N/mm². Die mit dem Mörtel instandgesetzten Flächen hatten einen grauen Farbton.

Als Komponente A des Gemischs können diverse Bisphenol-Harze verwendet werden. Dabei wurden beispielsweise gute Ergebnisse erzielt bei Verwendung von Bisphenol-Harzen, bei denen die Diol-Komponente 1,6 Hexandiol war.

Es können die verschiedensten Pigmente und Pigmentgemische eingesetzt werden, je nachdem, welche Farbe der Instandsetzungsmörtel haben soll. Wenn dieser beispielsweise eine graue Farbe aufweisen soll, kann man ein Pigmentgemisch aus weißem und schwarzem Pigment verwenden wie in dem oben aufgeführten Beispiel 1.

Es kommen ebenfalls die verschiedensten Füllstoffe in Betracht, deren Gesamtmenge ist im Rahmen der vorliegenden Erfindung nicht kritisch. Es können mehrere Füllstoffe unterschiedlicher chemischer Zusammensetzung verwendet werden. Es können Füllstoffe unterschiedlichen Feinheitsgrads eingesetzt werden. Bei Verwendung von Siliziumdioxid als Füllstoff wie in dem obigen Beispiel 1, kann man beispielsweise ein Gemisch aus mehreren Fraktionen mit unterschiedlichen Korngrößen einsetzen.

Die Komponente B des Gemischs enthält in dem obigen Beispiel einen aromatischen Alkohol als Beschleuniger. Dieser Bestandteil muss jedoch nicht unbedingt vorhanden sein. Als Härterkomponente kommen auch andere geeignete Amine in Betracht, aliphatische und cycloaliphatische Amine, insbesondere Polyamine und auch Polyamide. Es können in der Komponente B beispielsweise auch mehrere cycloaliphatische Polyamine unterschiedlicher chemischer Zusammensetzung im Gemisch verwendet werden.

### Prüfflüssigkeiten

Für die Versuche des Eindringverhaltens von Prüfflussigkeiten in Probekörper aus dem erfindungsgemäßen Mörtel wurden im Rahmen der vorliegenden Erfindung bei den Versuchen zwei Prüfflüssigkeiten verwendet wie sie in LAU-Anlagen eingelagert werden, die in der nachstehenden Tabelle 2 wiedergegeben sind. Bei der ersten genannten Prüfflüssigkeit handelt es sich um einen Flugturbinenkraftstoff, der in die Gruppe DK 2 "Flugkraftstoffe" einzuordnen ist, bei der zweiten genannten Prüfflüssigkeit handelt es sich um einen Dieselkraftstoff nach DIN EN 590, der in die Gruppe DK 3b einzuordnen ist.

**Tabelle 2**

| | Gruppe | Prüfflüssigkeit |
|---|---|---|
| **DK 2** | Flugkraftstoffe | Flugturbinenkraftstoff Jet A-1 mit |
| | | Additiven (NATO-Code F-34) |
| **DK 3b** | Diesel kraftstoffe | 80 Vol.-% Prüfgemisch A 20/NP II |
| | (nach DIN EN 590) | 20 Vol.-% Biodiesel |
| | Mit max. 20 Vol.-% Biodiesel | |

### Herstellung und Lagerung der Probekörper

Für die Feststellung der Veränderung der mechanischen Eigenschaften des erfindungsgemäßen Zwei-Komponenten-Epoxixdharz-Mörtels bei Einwirkung einer Prüfflüssigkeit wurden etwa quaderförmige Probekörper aus dem Mörtel mit einer Zusammensetzung gemäß Tabelle 1 hergestellt, so genannte Prismen. Diese Prismen wurden jeweils in die Prüfflüssigkeit für eine bestimmte Zeitdauer eingelagert. Es wurden derartige Prismen mit den Abmessungen 40 mm x 40 mm x 160 mm für die Einlagerungsversuche angefertigt (siehe auch Figur 2).

Die Prismen lagerten nach der Herstellung zunächst 24 Stunden bei 23 °C, 50 % rel. Luftfeuchte in der Schalung. Danach wurde entschalt und die erste Messung der Länge ausgeführt (Nullmessung).

Vor dem Beginn der Einlagerungsversuche wurden die Prismen über einen Zeitraum von 6 Tagen im Klima 23 °C, 50 % rel. Luftfeuchte gelagert.

Für die Bestimmung der Eindringtiefe der Prüfflüssigkeiten wurden zylindrische Probekörper aus einem erfindungsgemäßen Zwei-Komponenten-Mörtel mit einer Zusammensetzung gemäß Tabelle 1 hergestellt. Dabei handelte es sich insgesamt um 10 Zylinder mit einem Durchmesser von 103 mm und einer Höhe von 100 mm. Nach der Anlieferung wurden die Zylinder freistehend auf Dreikantleisten im Klima 23 °C, 50 % relative Luftfeuchte 20 Tage lang gelagert.

Für ergänzende Untersuchungen zur Bestimmung der Eindringtiefe wurde ein weiterer Zylinder (Durchmesser 100 mm, Höhe 300 mm) im Labor angefertigt und bis zur Prüfung 7 Tage bei 23 °C, 50 % rel. Luftfeuchte gelagert.

**Tabelle 3: weitere Angaben zur Prüfkörperherstellung**

| | |
|---|---|
| Komponenten | Zwei-Kom ponenten-Epoxidharz-Mörtel mit den Komponenten A und B gemäß Tabelle 1 |
| | Komponente A + Komponente B = 1000 + 33 [Masseteile] |
| Anrührart | Handrührgerät ATIKA RW 1400 Mischzeit insgesamt 6 min Ansatz: 10 kg Komp. A (Harz und Quarzsand) + 0,33 kg Komp. B (Härter) |
| Klimabedingungen | 23 °C, 50 % rel. Luftfeuchte |
| Prüfkörper | 33 (11 Serien) Standardprismen, 40 mm x 40 mm x160 mm 15 (5 Serien) Standardprismen, 40 mm x 40 mm x 160 mm, mit Messzapfen für die Messung der Längenänderung |

Die Beaufschlagung der Mörtelprismen mit der Prüfflüssigkeit erfolgte im Alter von 7 Tagen. Die Beaufschlagungsdauer betrug als Dauerbeanspruchung mit der unten in der Tabelle 4 aufgeführten Prüfflüssigkeit 3b (Dieselkraftstoff):
- 144 Stunden (Beanspruchungsstufen gemäß TRwS 786: Lagern, mittel; Abfüllen, mittel; Umschlagen, mittel)

Mit Fortsetzung der Versuche bis:
- 450 Stunden (Beanspruchungsstufen gemäß TRwS 786: Lagern, mittel; Abfüllen, hoch; Umschlagen, mittel)

Als Vergleich diente die Lagerung von Prismen bei 23 °C, 50 % rel. Luftfeuchte (Bezeichnung in den Ergebnisdarstellungen: Luft) und im Wasser (Karlsruher Leitungswasser).

Die Tabelle 4 zeigt die Ergebnisse der Längenänderung nach der Einlagerung der Prismen in die Prüfflüssigkeit über 144 Stunden. Die dargestellten Messwerte entsprechen dem Mittelwert aus jeweils drei Einzelmessungen.

**Tabelle 4: Ergebnisse der Prüfung zur Längenänderung, Einlagerungsdauer 144 Stunden**

| Prüfflüssigkeit | Längenänderung [mm/m] | | | | Anforderung nach [2]¹) |
|---|---|---|---|---|---|
| | Im Alter von 7 d | nach dem Ende der Einlagerung [h] | | | |
| | Bezugswert | 1 | 24 | 168 | |
| 3b | - 0,06 | - 0,11 | - 0,09 | - 0,11 | erfüllt |

| | | | | | |
|---|---|---|---|---|---|
| ¹⁾Massenänderung nach 168 h ≤ 1M.-% im Vergleich zum Bezugswert. Der Bezugswert ist der im Alter von 7 Tagen ermittelte Messwert bei 23 °C, 50 % rel. Luftfeuchte. [2] bezieht sich auf die technischen Prüfvorschriften für Grundierungen und Oberflächenbehandlungen aus Reaktionsharzen sowie für Oberflächenbeschichtungen und Betonersatzsysteme aus Reaktionsharzmörtel für die bauliche Erhaltung von Verkehrsflächen - Betonbauweisen, TP BEB RH-StB, Ausgabe 2002. | | | | | |

Tabelle 5 zeigt die Ergebnisse der Massenbestimmung während und nach der Einlagerung der Probekörper in eine Prüfflüssigkeit der Gruppe 3 b (Dieselkraftstoff).

**Tabelle 5: Ergebnisse der Prüfungen zur Massenänderung, Einlagerungsdauer 144 Stunden**

| Prüfflüssigkeit | Massenänderung [M.-%] | | | | Anforderung nach [2]¹) |
|---|---|---|---|---|---|
| | Im Alter von 7 d | nach dem Ende der Einlagerung [h] | | | |
| | Bezugswert | 1 | 24 | **168** | |
| 3b | 0,00 | 0,56 | 0,48 | 0,34 | erfüllt |

| | | | | | |
|---|---|---|---|---|---|
| ¹⁾Massenänderung nach 168 h ≤ 1M.-% im Vergleich zum Bezugswert. Der Bezugswert ist der im Alter von Tagen ermittelte Messwert bei 23 °C, 50 % rel. Luftfeuchte. | | | | | |

Tabelle 6 zeigt die Ergebnisse der Druckfestigkeitsbestimmung während und nach der Einlagerung der Probekörper in eine Prüfflüssigkeit der Gruppe 3 b (Dieselkraftstoff).

**Tabelle 6: Ergebnisse der Festigkeitsprüfungen nach einer Einlagerung über 144 Stunden, Druckfestigkeit**

| Prüfflüssigkeit | Druckfestigkeit [N/mm²] nach der Einlagerung [h] (auf die Nullprobe bezogene Verhältniswerte [-]) | | | Anforderung nach [2]¹) |
|---|---|---|---|---|
| | 1 | 24 | 168 | |
| 3b | 103,5 (096)⁷ | 100,4 (0,93)⁷ | 111,1 (1,03)⁷ | erfüllt |
| | (089)³³ | (0,87)³³ | (0,96)³³ | |

| | | | | |
|---|---|---|---|---|
| " Festigkeitsänderung nach 168 h ≤ ± 15 % bez. auf die Vergleichsproben bei 23 °C, 50 % rel. Luftfeuchte, geprüft im Alter von 7 Tagen: 107,8 N/mm² (1,00), geprüft im Alter von 33 Tagen: 116,0 N/mm² (1,00) | | | | |

Tabelle 7 zeigt die Ergebnisse der Biegzugfestigkeitsbestimmung während und nach der Einlagerung der Probekörper in eine Prüfflüssigkeit der Gruppe 3 b (Dieselkraftstoff).

**Tabelle 7: Ergebnisse der Festigkeitsprüfungen nach einer Einlagerung über 144 Stunden, Biegezugfestigkeit**

| Prüfflüssigkeit | Biegezugfestigkeit [N/mm²] nach der Einlagerung [h] (auf die Nullprobe bezogene Verhältniswerte [-]) | | | Anforderung nach [2]¹⁾ |
|---|---|---|---|---|
| | 1 | 24 | 168 | |
| 3b | 34,4 (1,74)⁷ | 38,0 (1,92)⁷ | 40,2 (2,03)⁷ | erfüllt |
| | (0,87)³³ | (0,96)³³ | (1,02)³³ | |

| | | | | |
|---|---|---|---|---|
| ¹⁾Festigkeitsänderung nach 168 h ≤ ± 15 % bez. auf die Vergleichsproben bei 23 °C, 50 % rel. Luftfeuchte, geprüft im Alter von 7 Tagen: 19,8 N/mm² (1,00), geprüft im Alter von 33 Tagen: 39,4 N/mm² (1,00) | | | | |

### Eindringtiefe der Prüfflüssigkeiten in zylindrische Probekörper aus einem erfindungsgemäßen Zwei-Komponenten-Mörtel mit einer Zusammensetzung gemäß Tabelle 1 (siehe auch Figur 3)

Anhand der Ergebnisse der Einlagerungsversuche war zu erkennen, dass die Prüfflüssigkeiten in den Mörtel (PC) eindringen. Um eine Quantifizierung vornehmen zu können, wurden die Eindringtiefen von zwei Prüfflüssigkeiten (Flugturbinenkraftstoff und Dieselkraftstoff) in einem Versuchsaufbau ermittelt.

Bei den Prüfkörpern handelte sich um Zylinder mit einem Durchmesser von 103 mm und einer Höhe von 100 mm. Nach der Herstellung wurden die insgesamt zehn Zylinder freistehend auf Dreikantleisten im Klima 23 °C, 50 % relative Luftfeuchte 20 Tage lang gelagert.

Für die Untersuchungen wurden drei Proben mit der geringsten Rohdichte ausgewählt (Nr. 7). Zusätzlich wurde ein Zylinder (Durchmesser 100 mm, Höhe 300 mm) im Labor der MPA Karlsruhe hergestellt. Hierbei wurde durch optimale Verdichtung eine maximale Rohdichte von 2,14 kg/dm³ erreicht. Das obere Drittel dieses Zylinders (Höhe 100 mm) wurde für einen weiteren Eindringversuch verwendet.

Die Beaufschlagungsdauer betrug 144 Stunden Dauerbeanspruchung (alternativ zu 28 Tage je 5 Stunden) für den Anwendungsbereich Abfüllen und Umschlagen in der Häufigkeitsstufe "mittel" nach dem DIBt-Prüfprogramm "Produkte bzw. Systeme zur Instandsetzung von Betonbauteilen in LAU-Anlagen", Stand April 2009.

Nachdem die Prüfflüssigkeiten 144 Stunden auf den Epoxidharzmörtel (PC) einwirkten, wurden die Zylinder gespalten und die Eindringtiefen e₁₄₄ᵢ bestimmt. Die Ergebnisse sind in der Tabelle 8 zusammengestellt. In Figur 3 ist ein Längsschnitt durch einen Prüfkörper nach der Einlagerung dargestellt.

**Tabelle 8: Ergebnisse der Bestimmungen der Eindringtiefen nach 144 Stunden**

| Prüfflüssigkeit (Rohdichte des Prüfkörpers [kg/dm³]) | Zylinder Nr. | Eindringtiefe [mm] | | | | | | Charakteristische Eindringtiefe ¹⁾ e₁₄₄ₖ = e₁₄₄ₘ 1,35 [mm] |
|---|---|---|---|---|---|---|---|---|
| | | Einzelwerte e₁₄₄ᵢ | | | | | Mittelwert e144m | |
| 3b (2,08) | 7 | 10 | 7 | 7 | 6 | 6 | 7 | 10 |
| Jet A-1 (Ergebnis aus [5] multipliziert mit √2¹⁾) | Mittel | - | - | - | - | - | 5 (3,7 · √2) | 7 |

### Zusammenfassende Bewertung

Die Ergebnisse der Untersuchungen der Änderung der mechanischen Eigenschaften nach Einlagerung in die Prüfflüssigkeit gemäß den obigen Tabellen 4 bis 7 zeigten, dass die Anforderungen nach DIBt-Prüfprogramm hinsichtlich der Volumen- bzw. Längenänderung und der Massenänderung nach einer Einlagerungdauer von 450 Stunden in die Prüfflüssigkeiten der Mediengruppe DK 3b erfüllt wurden. Die Anforderungen hinsichtlich der Änderung der Druck- und Biegezugfestigkeit nach einer Einlagerungsdauer von 144 Stunden und nach 450 Stunden wurde für die Mediengruppe DK 3b nachgewiesen.

| Nr. | Prüfungen des erhärteten Mörtels hinsichtlich der Beständigkeit und des Eindringens wassergefährdender Flüssigkeiten | Bewertung |
|---|---|---|
| 1 | Lagerung von Prismen in Prüfflüssigkeiten Änderung mechanischer Eigenschaften | Anforderung erfüllt für folgende Mediengruppe |
| | Druckfestigkeit | DK 3b nach 144 h Einlagerung |
| | | DK 3b nach 450 h Einlagerung |
| | Biegezugfestigkeit | DK 3b nach 144 h Einlagerung |
| | | DK 3b nach 450 h Einlagerung |
| | Volumenänderungen (Längenänderung) | DK 3b nach 450 h Einlagerung |
| | Massenänderung | DK 3b nach 450 h Einlagerung |
| 2 | Eindringtiefe von Prüfflüssigkeiten, Versuche an Zylindern | Mindestschichtdicke (1,5 · e₁₄₄ₖ) DK 3b = 15 mm |
| | | Flugturbinenkraftstoff Jet A-1 = 10 mm |

Hinsichtlich der Eindringtiefe der Prüfflüssigkeit besteht die Anforderung nach dem DIBt-Prüfprogramm, dass die 1,5fache charakteristische Eindringtiefe (eₜₖ) kleiner ist als die dünnste vorgesehene Reprofilierungsdicke. In der Praxis liegt die Schichtdicke reaktionsharzgebundener Instandsetzungsmörtel (PC) zwischen minimal 5 mm und maximal 40 mm. Die Anforderung hinsichtlich einer 1.5fachen charakteristische Eindringtiefe (e₁₄₄ₖ) ≤ 40 mm wurde für die Mediengruppe DK 3b nachgewiesen. Auf der Basis der Prüfergebnisse in und der Extrapolation auf einen Beanspruchungszeitraum von 144 Stunden ist diese Anforderung auch für Flugturbinenkraftstoffe Jet A-1 als erfüllt anzusehen.

Die Eindringtiefe der Prüfflüssigkeit wird durch die Verdichtung des Mörtels beeinflusst. Bei ausreichend hoher Verdichtung verringert sich die Eindringtiefe, wie anhand weiterer Ergebnisse aus Versuchen mit einer weiteren Prüfflüssigkeit der Gruppe DK 4a (Benzol und benzolhaltige Gemische) deutlich wurde (charakteristische Eindringtiefe e₁₄₄ₖ bei einer Rohdichte des Mörtels von 2,08 kg/dm³: > 40 mm, Rohdichte 2,14 kg/dm³: 17 mm). Daraus lässt sich ableiten, dass bei einer Rohdichte von 2,14 kg/dm³ (ca. 99 % der Rohdichte bei vollständiger Verdichtung) die 1,5fache charakteristische Eindringtiefe (eₜₖ) auch für derartige Prüfflüssigkeiten der Gruppe DK 4a unter der maximalen Reprofilierungsdicke von 40 mm liegt.

Zusammenfassend ist die Eignung des untersuchten epoxidharzgebundenen Instandsetzungsmörtels für die Instandsetzung von unbewehrten Betonbauteilen in LAU-Anlagen (Bodenplatten, Verkehrsflächen) bei der Beanspruchung nach dem DIBt-Prüfprogramm mit Medien der Gruppe DK 3b Dieselkraftstoffe (DIN EN 590) mit max. 20 Vol.-% Biodiesel, und Flugturbinenkraftstoff Jet A-1 mit Additiven (NATO-Code F-34) in der Beanspruchungsstufe "mittel" gemäß TRwS 786 für die Anlagenbetriebsarten Lagern, Abfüllen und Umschlagen ohne Einschränkungen gegeben.

Eine Erweiterung der Anwendung auch hinsichtlich der Medien der Gruppe DK 4a, Benzol und benzolhaltige Gemische, ist für die Beanspruchungsstufe "mittel" grundsätzlich möglich. Bei den Einlagerungsversuchen wurde auch eine entsprechende Beständigkeit gegenüber der Prüfflüssigkeit DK 4a nachgewiesen. Bei Verwendung im Zusammenhang mit diesen Prüfflüssigkeiten ist der Nachweis einer ausreichend hohen Verdichtung des Instandsetzungsmörtels zu empfehlen.

Weitere Versuche wurden mit Ottokraftstoffen durchgeführt, das heißt mit Superbenzin und Normalbenzin nach DIN EN 228, die einen maximalen Anteil von 5 Vol. % an Bioalkohol aufwiesen und in die Mediengruppe 1 eingeordnet werden. Auch hier konnte die mechanische Beständigkeit der mit dem erfindungsgemäßen Mörtel instandgesetzten Bereiche nachgewiesen und die Einhaltung der geforderten maximalen Eindringtiefe von 40 mm der Prüfflüssigkeiten in den Mörtel gewährleistet werden.

### BEZUGSZEICHENLISTE

- 10: Verkehrsflächen
- 11: Kanten
- 12: angrenzender Bereich
- 13: angrenzender Bereich
- 14: angrenzender Bereich
- 15: bestehende Betonkonstruktion
- 16: instandgesetzter Bereich
- 17: bestehende Betonkonstruktion
- 18: Kompressionsprofil
- 19: Fugendichtstoff
- 20: Prüfkörper
- 21: Becken
- 22: Prüfflüssigkeit
- 23: Halterung
- 24: Prüfkörper
- 26: Maßstab
- 27: eingedrungene Flüssigkeit

## Patentansprüche

1. Lösungsmittelfreier Mehr-Komponenten-Reaktionsharzmörtel auf Epoxidharzbasis mit mineralischen Füllstoffen und gegebenenfalls Pigmenten, **dadurch gekennzeichnet, dass** dieser eine hohe Beständigkeit gegenüber wassergefährdenden Flüssigkeiten aufweist, derart, dass ein aus diesem Mörtel hergestellter Prüfkörper nach Aushärtung eine Eindringtiefe für Dieselkraftstoffe von weniger als 40 mm aufweist.

2. Lösungsmittelfreier Mehr-Komponenten-Reaktionsharzmörtel auf Epoxidharzbasis nach Anspruch 1, **dadurch gekennzeichnet, dass** aus diesem Mörtel hergestellter Prüfkörper nach Einlagerung in einen Dieselkraftstoff für eine Zeitdauer von ca. 6 - 7 Tagen eine relative Längenänderung von weniger als 0,20 mm/m aufweist.

3. Lösungsmittelfreier Mehr-Komponenten-Reaktionsharzmörtel auf Epoxidharzbasis nach Anspruch 1 oder 2, **dadurch gekennzeichnet, dass** ein aus diesem Mörtel hergestellter Prüfkörper nach Einlagerung in einen Dieselkraftstoff für eine Zeitdauer von ca. 6 - 7 Tagen eine Massenänderung von weniger als 0,40 Massen-% aufweist.

4. Lösungsmittelfreier Mehr-Komponenten-Reaktionsharzmörtel auf Epoxidharzbasis nach einem der Ansprüche 1 bis 3, **dadurch gekennzeichnet, dass** ein aus diesem Mörtel hergestellter Prüfkörper nach Einlagerung in einen Dieselkraftstoff für eine Zeitdauer von ca. 6 - 7 Tagen eine relative Änderung in der Druckfestigkeit (N/mm²) bezogen auf eine Vergleichsprobe von weniger als 15 % aufweist.

5. Lösungsmittelfreier Mehr-Komponenten-Reaktionsharzmörtel auf Epoxidharzbasis nach einem der Ansprüche 1 bis 4, **dadurch gekennzeichnet, dass** ein aus diesem Mörtel hergestellter Prüfkörper nach Einlagerung in einen Dieselkraftstoff für eine Zeitdauer von ca. 6 - 7 Tagen eine relative Änderung in der Biegezugfestigkeit (N/mm²) bezogen auf eine Vergleichsprobe von weniger als 15 % aufweist.

6. Lösungsmittelfreier Mehr-Komponenten-Reaktionsharzmörtel auf Epoxidharzbasis nach einem der Ansprüche 1 bis 5, **dadurch gekennzeichnet, dass** ein aus diesem Mörtel hergestellter Prüfkörper nach Aushärtung eine Eindringtiefe für Dieselkraftstoffe von weniger als 20 mm aufweist.

7. Lösungsmittelfreier Mehr-Komponenten-Reaktionsharzmörtel auf Epoxidharzbasis nach einem der Ansprüche 1 bis 6, **dadurch gekennzeichnet, dass** ein aus diesem Mörtel hergestellter Prüfkörper nach Aushärtung eine Eindringtiefe für Flugturbinenkraftstoffe von weniger als 40 mm, vorzugsweise weniger als 20 mm aufweist.

8. Lösungsmittelfreier Mehr-Komponenten-Reaktionsharzmörtel nach einem der Ansprüche 1 bis 7, hergestellt ausgehend von einer Harz-Komponente A umfassend ein Bisphenol-A-Harz oder Bisphenol A/F - Harz und wenigstens einen Füllstoff, sowie einer Härter-Komponente B umfassend ein cycloaliphatisches Polyamin, **dadurch gekennzeichnet, dass** das Gewicht der Summe der Füllstoffe in der Harz-Komponente A wenigstens das 10-fache des Gewichts des Bisphenol-Harzes in der Harz-Komponente A beträgt.

9. Lösungsmittelfreier Mehr-Komponenten-Reaktionsharzmörtel nach Anspruch 8, **dadurch gekennzeichnet, dass** dieser hergestellt ist aus einer Zusammensetzung enthaltend die Harz-Komponente A und die Härter-Komponente B in einem Gewichts-Mischungsverhältnis von wenigstens 25 : 1.

10. Lösungsmittelfreier Mehr-Komponenten-Reaktionsharzmörtel nach Anspruch 8 oder 9, **dadurch gekennzeichnet, dass** die Harz-Komponente A als Füllstoff wenigstens eine Substanz ausgewählt aus der Gruppe umfassend Quarzmehl und Siliziumdioxid und/oder als Pigment Titandioxid und/oder Ruß enthält.

11. Lösungsmittelfreier Mehr-Komponenten-Reaktionsharzmörtel nach einem der Ansprüche 8 bis 10, **dadurch gekennzeichnet, dass** die Harz-Komponente wenigstens einen Feinfüllstoff, vorzugsweise Quarzmehl, und wenigstens einen Füllstoff gröberer Körnung, vorzugsweise Siliziumdioxid, enthält, wobei der Gewichtsanteil des Füllstoffs oder der Füllstoffe gröberer Körnung wenigstens das 4-fache, bevorzugt wenigstens das 5-fache des Gewichtsanteils des Feinfüllstoffs oder der Feinfüllstoffe beträgt.

12. Lösungsmittelfreier Mehr-Komponenten-Reaktionsharzmörtel nach einem der Ansprüche 8 bis 11, **dadurch gekennzeichnet, dass** die Härter-Komponente B wenigstens einen Alkohol als Beschleuniger enthält.

13. Verwendung eines lösungsmittelfreien Mehr-Komponenten-Reaktionsharzmörtels auf Epoxidharzbasis nach einem der Ansprüche 1 bis 12 als Instandsetzungsmörtel zur Instandsetzung von unbewehrten und bewehrten Betonbauteilen von Anlagen zum Lagern, Abfüllen und Umschlagen wassergefährdender Stoffe.
